# EUROPEAN PATENT APPLICATION

(11) **EP 1 875 798 A1**
(43) Date of publication of application: **09.01.2008**
(21) Application number: 06755318.0
(22) Date of filing: 24.04.2006
(51) Int. Cl.: A01G 13/02

(54) **SHEET FOR AGRICULTURAL USE**

(30) Priority: 27.04.2005 ES 200501019
(71) Applicant: Mimcord S.A., E-08560 Manlleu (ES)
(72) Inventor: VILAMALA I SALA, Jordi, E-08560 Manlleu (Barcelona) (ES)
(74) Representative: Maldonado Jordan, Julia
(86) International application number: PCT/ES2006/000199
(87) International publication number: WO 2006/114461

(57) **Abstract**

The invention relates to a sheet for agricultural use. The inventive sheet comprises biodegradable cellulose paper (1), the surface of which is coated with celluloses, waxes, resins and pigments. The sheet is intended to be placed on agricultural soil such as to enable the growth of one or more plants through holes (12) that are defined therein. The resins comprise acrylic resins and the waxes can be polyethylene or paraffin waxes.

## Description

### OBJECT OF THE INVENTION

This invention refers to a sheet for agricultural use, of the type used to cover soil on farm land, and through which some holes are made so as to let the plants that are being grown to come through to the outside.

### BACKGROUND TO THE INVENTION

At the present time the use of opaque plastic sheets that are placed on the ridges or on the flat soil and which have some holes made through which the plants being grown can come through, both inside greenhouses and equally outside, are in common use for the growing of plants. These plastics have different uses, the main ones being to prevent weeds or undesirable plants from growing, by preventing them from getting the sunlight, and to keep the humidity of the soil by preventing evaporation due to the impermeable nature of the covering sheet.

However, the use of these plastics has certain problems. First is that they are not easily recyclable, as it is common that at the end of the growing of the crops, the surface earth and the plants are used for composting and therefore it is necessary to recover the used plastic and to separate it for independent treatment. Second is that its impermeability is total, thus the water is condensed in excessive amounts, which can cause the plant to wither from an excess of water and the roots becoming flooded. In addition, the action of the sun causes an accelerated breakdown of the plastic, making it crumbly, and so the sheet tears very easily, forming fragments that end up being mixed up with the soil.

### DESCRIPTION OF THE INVENTION

The sheet for agricultural use of this present invention has some technical peculiarities that allows an optimised use for the growing of plants, both in greenhouses and equally outside, and it is totally recycled for composting on being biodegradable.

The sheet in question is made up of a biodegradable cellulose paper, with a surface covering of waxes, resins and pigments, said sheet being totally or partially impermeable, resistant to humidity, opaque and of any colour, however by preference it will be black.

The waxes, resins and pigments applied onto the cellulose paper make up a surface coating, free of solvents, heavy metals and non-biodegradable elements.

This use of this sheet is completely similar to that of the conventional plastics that are used for the same purpose, but having appreciable advantages. The first is that the cellulose paper (recycled or not) is biodegradable and therefore can be composted together with the rest of the plant wastes and the surface soil at the end of the growing. In turn it has a resistance to humidity (from 10% to 25%) that allows its use with the watering that must be made for the plant.

The waxes used can be polyethylene or paraffin and allow the impermeability that is required for the cellulose paper, giving it the required rigidity so that it can adapt to the profile of the land or ridge where it is to be placed.

The resins used are acrylic and allow for the fixing of the pigments. They also allow the impermeability and the resistance to tearing of the sheet.

The pigments provide the opacity that is necessary to prevent the growth of weeds and undesirable plants in those areas of the ground covered by the sheet.

### DESCRIPTION OF THE DRAWINGS

In order to complement the description that is being made and for the purpose of giving a greater understanding of the characteristics of the invention, this present description is accompanied by a set of drawings in which the following have been represented by way of non limitative example:
Figure 1 shows a perspective view of a fragment of the sheet for agricultural use
Figure 2 shows a perspective view of the sheet, in use, arranged on a ridge or furrow of agricultural land.

### PREFERRED EMBODIMENT OF THE INVENTION

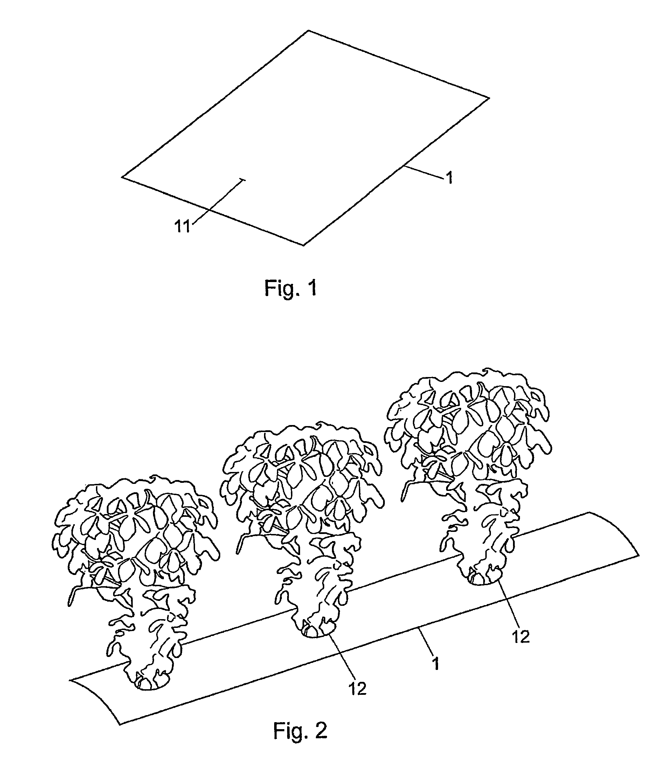

As and how shown in the referred to figures the sheet for agricultural use is made up of biodegradable cellulose paper (1), provided with a surface coating (11) of waxes, resins and pigments, said sheet being operationally suited for placement on farm land. The sheet has some openings (12) through which the plants being grown can emerge to the outside, as and how shown in figure 2.

Said sheet is totally or partially impermeable, opaque and resistant to humidity.

The waxes are made from a polyethylene or paraffin base which gives rigidity and impermeability to the sheet.

The resins are acrylic resins, providing impermeability and increasing the resistance to the tearing of the sheet. Said acrylic resins allow the fixing of the pigments, which provide the opacity to the cellulose paper, by preference being black, although the use of other colours has been envisaged.

The sheet obtained has a gram weight of 80 to 90 grams per square metre, an elasticity of approximately 5.6% and a humidity resistance of from 10% to 25%.

Once having described the nature of the invention sufficiently, likewise having given an example of a preferred embodiment it is placed on record that for such purposes as is required the materials, shape, size and arrangement of the described elements can be modified, provided that they do not mean an alteration of the essential characteristics of the invention that are defined by the claims that are included below.

## Claims

1. A sheet for agricultural use, of the type that is totally or partially impermeable and resistant to humidity, which is opaque and of any colour, although by preference it will be black, **characterised in that** it includes a biodegradable cellulose paper (1) and a surface coating (11) of waxes, resins and pigments, the sheet being operationally suitable for placement on farm land and allows the growth of some or other plants through some holes (12) defined or made in said sheet.

2. A sheet, according to claim 1, **characterised in that** the waxes are polyethylene waxes.

3. A sheet, according to claim 1, **characterised in that** the waxes are paraffin waxes.

4. A sheet, according to claim 1, **characterised in that** the resins are acrylic resins.
